# EUROPÄISCHE PATENTANMELDUNG

(11) **EP 1 882 774 A1**
(43) Veröffentlichungstag der Anmeldung: **30.01.2008**
(21) Anmeldenummer: 07112878.9
(22) Anmeldetag: 20.07.2007
(51) Int. Cl.: D21F 1/82, D21F 1/68, D21F 1/66

(54) **Einrichtung zur Papierherstellung, insbesondere Altpapier**

(30) Priorität: 24.07.2006 DE 102006034186
(71) Anmelder: SIEMENS AKTIENGESELLSCHAFT, 80333 München (DE)
(72) Erfinder: Müller, Bernd, 85368 Moosburg (DE); Strätz, Klaus, 96191 Viereth-Trunstadt (DE)

(57) **Zusammenfassung**

Einrichtung zur Papierherstellung, insbesondere Altpapier, aus einem wasserhaltigen Faserbrei, wobei das Wasser dem Faserbrei bis zur Ausgabe des Endprodukts weitgehend entzogen, in einer oder mehreren Auffangeinrichtungen aufgefangen und über eine oder mehrere Leitungen einer Wiederverwendung an einer Einrichtungskomponente zugeführt oder an eine Kläreinrichtung abgeführt wird, wobei wenigstens eine einer Auffangeinrichtung (9, 10) oder einer Leitung (13) zugeordnete Vorrichtung (11) zum gezielten Ausfällen eines Reaktionsprodukts (R) von im Wasser gelöst vorliegenden Reaktionspartnern und/oder Abziehen des Reaktionsprodukts (R), insbesondere Ca-CO₃, vorgesehen ist.

## Beschreibung

Die Erfindung betrifft eine Einrichtung zur Papierherstellung, insbesondere Altpapier, aus einem wasserhaltigen Faserbrei, wobei das Wasser dem Faserbrei bis zur Ausgabe des Endprodukts weitgehend entzogen, in einer oder mehreren Auffangeinrichtungen aufgefangen und über eine oder mehrere Leitungen einer Wiederverwendung an einer Einrichtungskomponente zugeführt oder an eine Kläreinrichtung abgeführt wird.

Beispielsweise im Rahmen der Altpapierherstellung wird hierfür geeigneter Papierabfall in einer Stoffaufbereitung zur Herstellung eines Faserbreis, aus dem dann das Altpapier hergestellt wird, aufbereitet. Hierzu wird das Papier zunächst aufgelöst, so dass sich ein die Papierfasern enthaltender Brei ergibt, der anschließend noch gereinigt wird. Diese Stoffaufbereitung dauert relativ lange, üblicherweise erfolgt auch eine Variation des pH-Werts des Wassers, um die Stoffaufbereitung zu beschleunigen bzw. zu optimieren. Es kommt, auch resultierend aus der gegebenen Temperatur der Suspension, zu einem Gärprozess, während dem sich in der Suspension organische Säuren bilden. In dem Ausgangspapier, das innerhalb der Stoffaufbereitung zur Weiterverarbeitung aufbereitet werden soll, ist häufig ein gewisser Anteil an CaCO₃ enthalten, der im Rahmen der seinerzeitigen Papierherstellung, insbesondere von weißem hochwertigem Papier, als Füllstoff zugegeben wurde. Die sich bildenden organischen Säuren reagieren nun mit dem CaCO₃, was dazu führt, dass sich dieses löst, mithin also in Form von Kalzium-Ionen und Kohlendioxid in der Suspension gelöst vorliegt.

Das Wasser wird dem Papierbrei während des Verarbeitungsprozesses ein- oder mehrfach entzogen. Je nachdem, um welches Wasser es sich handelt bzw. welchen Reinheitsgrad das Wasser aufweist, kann es entweder im Herstellkreislauf wieder verwendet werden, es wird also einer Einrichtungskomponente zugeführt, beispielsweise um diese zu spülen oder dergleichen, oder es wird, wenn es reines Schmutzwasser ist, einer Kläreinrichtung zugeführt. Im Rahmen dieser Wasserbehandlung oder innerhalb dieses Wasserkreislaufs ist das Wasser diversen weiteren Einflüssen ausgesetzt, die wiederum dazu führen, dass das Gleichgewicht zwischen dem gelösten Kalzium und dem gelösten Kohlendioxid im Wasser geändert wird, was dazu führt, dass es zu einer unkontrollierten Ausfällreaktion kommt und sich CaCO₃ im Wasser bildet. Dies kann an einer beliebigen Stelle innerhalb der Einrichtung bzw. der Wasserführung erfolgen. Das CaCO₃ lagert sich unkontrolliert ab, es kann zu Verstopfung von Leitungen, zum Zusetzen von Filtern oder dergleichen kommen. Auch ändert sich hierdurch letztlich unkontrolliert die Wasserzusammensetzung, was sich auch nachteilig auf den gesamten Chemismus der Papierherstellung auswirkt. Etwaige Mittel oder Additive, die zugegeben werden, reagieren nicht mehr richtig, da infolge des ausgefällten Ca-CO₃ beispielsweise der pH-Wert des Wassers geändert wurde es ist mehr Mittel oder Additiv zuzusetzen, um die entsprechende Reaktion zu wirken etc.

Aus der WO 2002/097189 A1 ist eine Reinigungseinrichtung für Papiermaschinen bekannt, die dort in den Wasserkreislauf zu schalten ist, insbesondere soll mit dieser Einrichtung das Siebwasser, das vom Transportsieb abtropft und zwangsläufig aufgefangen und über Leitungen transportiert wird, behandelt werden. Zu diesem Zweck wird über diese Reinigungseinrichtung zunächst zur Erhöhung des pH-Werts NaOH zugegeben, was über eine entsprechende Zuführung in eine Leitung oder einen Mischtank erfolgt. Anschließend erfolgt an einer anderen Stelle über eine Zuführung in eine Leitung oder einen Drucktank oder dergleichen die Zufuhr von Kohlendioxid, dem eine Doppelfunktion zukommt. Zum einen erfolgt hierüber erst der Start der Ausfällreaktion, zum anderen wird über die zugeführte Kohlendioxidmenge auch gleichzeitig offensichtlich die Neutralisierung des zuvor im pH-Wert über das zugegebene NaOH veränderten Wassers. Anschließend erfolgt die Trennung des Reaktionsprodukts durch Filtration.

Der Erfindung liegt damit das Problem zugrunde, eine Einrichtung anzugeben, mit der die Papierherstellung bei stabileren, reproduzierbareren Arbeitsbedingungen möglich ist.

Zur Lösung dieses Problems ist bei einer Einrichtung der eingangs genannten Art erfindungsgemäß wenigstens eine einer Auffangeinrichtung oder einer Leitung zugeordnete Vorrichtung zum gezielten Ausfällen eines Reaktionsprodukts von im Wasser gelöst vorliegenden Reaktionspartners und/oder abziehendes Reaktionsprodukts, insbesondere CaCO₃, vorgesehen.

Bei der erfindungsgemäßen Einrichtung wird das Reaktionsprodukt, bevorzugt CaCO₃, das die meisten Probleme verursacht, an einer oder mehreren ausgewählten Stellen unter Einschaltung einer entsprechend hierfür vorgesehenen und ausgelegten Vorrichtung gezielt ausgefällt oder, sofern es sich um bereits vorhandenes Reaktionsprodukt handelt, gezielt abgezogen. Das Wasser wird also gezielt hinsichtlich dieses störenden Reaktionsprodukts behandelt und gereinigt, so dass es, soweit es der Wiederverwendung zugeführt wird, stets im Wesentlichen die gleiche Zusammensetzung aufweist, nachdem das Reaktionsprodukt bzw. seine gelösten Ausgangsverbindungen im Wasser nicht mehr oder nur noch in einem vernachlässigbaren Umfang enthalten sind. Hieraus resultiert, dass die vormals gegebenen Nachteile, die sich aus dem damit beladenen wieder verwendeten Wasser im Herstellungzyklus ergeben haben, vorteilhaft nicht mehr gegeben sind, da das Reaktionsprodukt bzw. dessen gelöste Ausgangsverbindungen nicht mehr unkontrolliert im Wasser vorliegen und es auch zu keinen unkontrollierten Ausfällereaktionen des Reaktionsprodukts innerhalb der Prozessstrecke mehr kommen kann. Ein Zusetzen von Leitungen oder anderen Einrichtungskomponenten wie Filtern oder Sieben wird unterbunden. Hierfür ist an einer oder an mehreren ausgewählten Stellen innerhalb der Wasserführung eine entsprechende Vorrichtung vorgesehen, die natürlich auch mehrere separate Vorrichtungskomponenten umfassen kann, die aber in jedem Fall derart ausgebildet ist, dass mit ihr bereits gebildetes, im Wasser vorhandenes Reaktionsprodukt, also beispielsweise CaCO₃, abgezogen werden kann, und mit der, sofern erforderlich, auch gezielt die Ausfällreaktion in Gang gesetzt werden kann.

Hierfür weist die Vorrichtung eine Zugabeeinrichtung für wenigstens ein die Ausfällreaktion in Gang setzendes Mittel, im Falle einer CaCO₃-Ausfällung insbesondere NaOH, auf. Das heißt, über die Zugabeeinrichtung wird gezielt eine gewisse Menge an NaOH kontinuierlich dem geförderten Wasser zugesetzt, und hierüber die Ausfällreaktion des CaCO₃ in Gang gesetzt. Über eine nachgeschaltete Abzieheinrichtung wird das ausgefällte Reaktionsprodukt, zusammen mit etwaigem bereits vorhandenen Reaktionsprodukt, abgezogen. Alternativ zur gezielten Zugabe eines Ausfällmittels wäre es auch denkbar, dass die Vorrichtung eine Einstelleinrichtung zur Änderung wenigstens eines die Ausfällreaktion in Gang setzenden Parameters, insbesondere der Wassertemperatur aufweist. Wird das Wasser auf eine vorbestimmte Temperatur erwärmt, so kommt es zu einer temperaturbedingten Ausfällreaktion. Über eine nachgeschaltete Abzieheinrichtung wird dann auch hier das Reaktionsprodukt abgezogen, wobei hier dann aber bevorzugt auch eine Kühleinrichtung zum erneuten Kühlen des Wassers auf die benötigte Arbeitstemperatur vorgesehen sein sollte.

Wird eine Zugabeeinrichtung zum Zuführen eines Ausfällmittels vorgesehen, so ist zweckmäßigerweise auch eine dieser nachgeschaltete Neutralisiereinrichtung zum Neutralisieren einer durch die Mittelzugabe verursachten Veränderungen des pH-Werts des Wassers vorgesehen. Denn durch die Zugabe des Mittels, beispielsweise von NaOH, und die nachfolgende Ausfällreaktion ändert sich zwangsläufig der pH-Wert des Wassers, es wird basischer. Diese Veränderung kann über diese Neutralisiereinrichtung, bei der der pH-Wert durch Zugabe eines weiteren Neutralisiermittels, bei dem es sich um eine Säure handeln kann, wieder ausgeglichen.

Für eine möglichst effiziente Trennung des Reaktionsprodukts vom Wasser weist die Vorrichtung bevorzugt eine Zentrifugaltrenneinrichtung auf, der das das Reaktionsprodukt, insbesondere CaCO₃, enthaltende Wasser zum Trennen und Abziehen des Reaktionsprodukts vom Wasser zugeführt wird. Das beladene Wasser wird in die kegelige Zentrifugaltrenneinrichtung tangential eingeführt, so dass sich eine Wirbelbewegung ergibt, die die schwereren Reaktionsprodukte nach unten zum Abzug fördert, während das Wasser über einen zweiten oberen Abzug wieder gereinigt entnommen wird. Das abgezogene Reaktionsprodukt, das natürlich auch einen Anteil an Restwasser enthält, mithin also als Schlamm vorliegt, wird anschließend entweder einer weiteren Klärstufe zugeführt oder entsorgt.

Die Zentrifugaltrenneinrichtung ist bevorzugt der Zugabe- oder Einstelleinrichtung nachgeschaltet und/oder der Neutralisiereinrichtung vorgeschaltet, so dass sich mithin ein relativ kompakter Aufbau ergibt, der die drei wesentlichen Vorrichtungskomponenten, nämlich Zugabe- oder Einstelleinrichtung zum Ausfällen des Reaktionsprodukts, Zentrifugaleinrichtung zum Trennen und Abziehen des Reaktionsprodukts und Neutralisiereinrichtung (sofern eine Zugabeeinrichtung vorgesehen ist) zum Einstellen des pH-Werts umfasst.

Wenngleich die erfindungsgemäße Vorrichtung, die gegebenenfalls zusätzlich noch eine Filtereinrichtung z. B. einen Scheibenfilter umfassen kann, an unterschiedlichsten Stellen innerhalb der Papierherstelleinrichtung eingeschaltet werden kann, gibt es eine bevorzugte Stelle, wo die Vorrichtung zu integrieren ist. Üblicherweise weist eine Papierherstelleinrichtung eine erste und wenigstens eine zweite Auffangeinrichtung für von einem den aufgebrachten Faserbrei transportierenden Transportsieb abtropfendes Wasser auf. Dieses Wasser wird als Siebwasser bezeichnet und häufig in wenigstens zwei, üblicherweise drei separaten Fraktionen aufgefangen. Das sogenannte "Siebwasser 1" ist ein papierstoffhaltiges, qualitativ hochwertiges Wasser, das als Verdünnungswasser unmittelbar einer Wiederverwertung zugeführt werden kann, nämlich der Verdünnung des Faserbreis am Stoffauflauf, wo also der Faserbrei auf das Transport- und Entwässerungssieb aufgebracht wird. Das "Siebwasser 2" ist verschmutzter, kann aber je nach Verschmutzungsgrad auch unmittelbar einer Wiederverwendung, beispielsweise auch der Verdünnung zugeführt werden, wenn es hinreichend sauber ist. Andernfalls wird es dem sogenannten "Siebwasser 3" zugeschlagen, das stark verschmutzt ist und bei bekannten Einrichtungen der Kläreinrichtung zugeführt wird. Erfindungsgemäß wird nun wenigstens einer dieser Auffangeinrichtungen, insbesondere der zweiten, wo also das "Siebwasser 2" anfällt, gegebenenfalls auch der dritten, wo das "Siebwasser 3" anfällt, oder einer von diesen abgehenden Leitung die Vorrichtung zugeordnet. Das heißt, es erfolgt eine gezielte Behandlung des "Siebwassers 2" und/oder des "Siebwassers 3". Insbesondere beim "Siebwasser 2" besteht die Möglichkeit, unter Verwendung der erfindungsgemäßen Vorrichtung die Wasserqualität so herzustellen, es mithin also so aufzubereiten, dass es in vollem Umfang wieder verwendet werden kann, beispielsweise zur Verdünnung im Bereich des Stoffauflaufs oder zur Reinigung von Einrichtungskomponenten wie des Siebes oder anderer Filtereinrichtungen wie der Siebsaugwalze etc. Auch das "Siebwasser 3" kann hinreichend gereinigt werden, so dass es zumindest für unkritische Verwendungen, wo es also nicht unmittelbar in den Herstellprozess eingeführt wird, geeignet ist.

Weitere Vorteile, Merkmale und Einzelheiten der Erfindung ergeben sich aus den im folgenden beschriebenen Ausführungsbeispielen sowie anhand der Zeichnungen. Dabei zeigen:
- FIG 1: eine Prinzipdarstellung einer erfindungsgemäßen Einrichtung zur Papierherstellung einer ersten Ausführungsform, und
- FIG 2: eine Prinzipdarstellung einer erfindungsgemäßen Einrichtung zur Papierherstellung einer zweiten Ausführungsform.

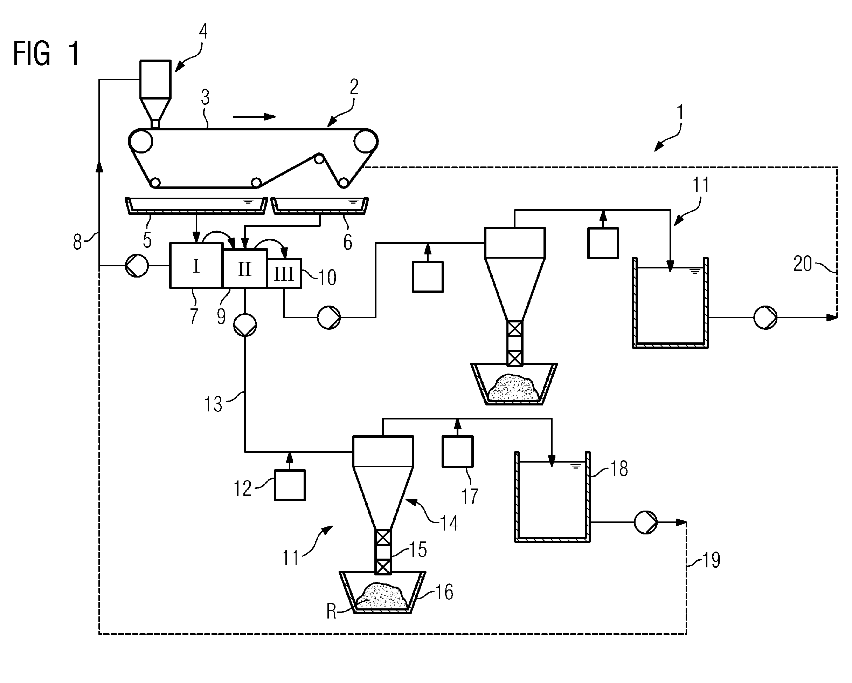

FIG 1 zeigt eine erfindungsgemäße Einrichtung 1 zur Papierherstellung. Diese umfasst zum einen die Papiermaschine 2, die hier nur exemplarisch und in Form eines Ausschnitts dargestellt ist. Gezeigt ist ein Transportsieb 3, das, wie durch den Pfeil dargestellt ist, umläuft. Am vorderen Bandende ist eine Stoffaufgabe 4 vorgesehen, auf die der Faserbrei, der zuvor in einer nicht näher gezeigten Stoffaufbereitung entsprechend aufbereitet wurde, aufgegeben wird. Über das Transportsieb 3 wird dem Faserbrei Wasser entzogen, das im Wassergehalt reduzierte Endprodukt wird anschließend von dem Transportsieb 3 abgenommen und einer nicht näher gezeigten Weiterverarbeitung zugeführt.

Das Wasser wird im gezeigten Beispiel in zwei unterhalb des Transportsiebs 3 vorgesehenen Auffangwannen 5, 6 aufgefangen. Das von der Auffangwanne 5 aufgefangene Wasser, das als sogenanntes "Siebwasser 1" bezeichnet wird, wird in einem ersten Auffangbehälter 7 gesammelt, der in FIG 1 mit I gekennzeichnet ist. Das "Siebwasser 1" ist das qualitativ beste, weil reinste Wasser. Es kann, wie durch die Rohrleitung 8 dargestellt ist, einer Wiederverwendung zugeführt werden, im gezeigten Beispiel wird es zum Verdünnen des aufbereiteten Faserbreis der Stoffaufgabe 4 zugeführt.

Das in der Auffangwanne 6 aufgefangene Wasser wird dem Auffangbehälter 9 zugeführt, es handelt sich um das sogenannte "Siebwasser 2". Dieses Wasser ist mit II in FIG 1 gekennzeichnet. Das "Siebwasser 2" ist, verglichen mit dem "Siebwasser 1", deutlich verschmutzter, kann aber, worauf nachfolgend noch eingegangen wird, entsprechend aufbereitet werden. Dargestellt ist des Weiteren noch ein Auffangbehälter 10, der das sogenannte "Siebwasser 3" enthält, was mit III in FIG 1 gezeichnet ist. Dieses Wasser ist das verschmutzteste Wasser, das bis dato üblicherweise umgehend einer Klärung zugeführt wurde.

Wie FIG 1 zeigt, ist sowohl dem Auffangbehälter 9 als auch dem Auffangbehälter 10, also dem "Siebwasser 2" und dem "Siebwasser 3", jeweils eine Vorrichtung 11 zum gezielten Ausfällen und Abziehen eines Reaktionsprodukts im jeweiligen Wasser, nämlich des CaCO₃, nachgeschaltet. Der Einfachheit halber sei die Vorrichtung 11, die dem Auffangbehälter 9 nachgeschaltet ist, näher erläutert, die gleichen Ausführungen gelten jedoch bezüglich der Vorrichtung 11, die dem Auffangbehälter 10 nachgeschaltet ist.

Die Vorrichtung 11 umfasst eine Zugabeeinrichtung 12, über die ein Mittel, das die Ausfällreaktion des Reaktionsprodukts, dessen Reaktionspartner in Form von gelöstem Kalzium und gelöstem Kohlendioxid im Wasser vorliegen, in Gang setzt. Bevorzugt wird hier NaOH in entsprechend vorbestimmter Dosierung zugegeben. Das heißt, das Siebwasser 2 wird über die Rohrleitung 13 aus dem Auffangbehälter 9 abgezogen und der Vorrichtung 11 zugeführt, wo es zunächst mit NaOH versetzt wird. Infolge dieser Mittel- oder Additivzugabe kommt es sofort zur Ausfällreaktion, es bildet sich festes CaCO₃. Anschließend wird das Wasser einer Zentrifugaltrenneinrichtung 14 zugeführt, wo es seitlich und tangential im oberen Bereich in die kegelförmige Einrichtung einströmt, so dass sich ein Wasserwirbel bildet. Das schwere Reaktionsprodukt R, also das CaCO₃, sammelt sich am unteren schmalen Ende der kegelförmigen Zentrifugaltrenneinrichtung an und wird über den Abzug 15 abgezogen und in einer Auffangwanne 16 aufgefangen und anschließend entsorgt. Das nunmehr von dem Reaktionsprodukt R, das wie beschrieben durch die NaOH-Zugabe gezielt ausgefällt wurde, bzw. das gegebenenfalls bereits im "Siebwasser 2" als ausgefälltes Reaktionsprodukt R vorhanden war, gereinigte Wasser wird nun von der Zentrifugaltrenneinrichtung 14 abgezogen und einer Neutralisiereinrichtung 17 zugeführt. Dort wird der pH-Wert des Wassers, der infolge der NaOH-Zugabe über die Zugabeeinrichtung 12 zwangsläufig verändert wurde, gemessen und wieder auf den Wert eingestellt, der für eine Wiederverwendung des gereinigten "Siebwassers 2" nötig ist. Das nunmehr gereinigte "Siebwasser 2" wird anschließend in einem Pufferbehälter 18 aufgefangen und kann bei Bedarf abgezogen werden. Exemplarisch ist hier, wie durch die gestrichelte Leitung 19 dargestellt ist, vorgesehen, das gereinigte "Siebwasser 2" der Leitung 8 zuzuführen, über die das "Siebwasser 1" der Verdünnung des Faserbreis in der Stoffaufbereitung 4 zugeführt wird.

In gleicher Weise arbeitet die Vorrichtung 11, die dem Auffangbehälter 10 nachgeschaltet ist. Auch hier erfolgt die NaOH-Zugabe zum Ingangsetzen der Ausfällereaktion, der dann die Zentrifugaltrennung sowie die erneute pH-Wert-Neutralisierung nachgeschaltet ist. Dieses Wasser wird, wie durch die gestrichelt dargestellte Leitung 20 exemplarisch dargestellt ist, ebenfalls einer Wiederverwendung zugeführt, hier jedoch beispielsweise zum Reinigen des Transportsiebs 3 oder gegebenenfalls einer weiteren Einrichtungskomponente, es wird also nicht dem Faserbrei zugeführt, da es trotz der Entfernung des CaCO₃ gegebenenfalls noch weitere Verschmutzungen enthält, die eine Wiederverwendung unmittelbar im Faserbrei ausschließen.

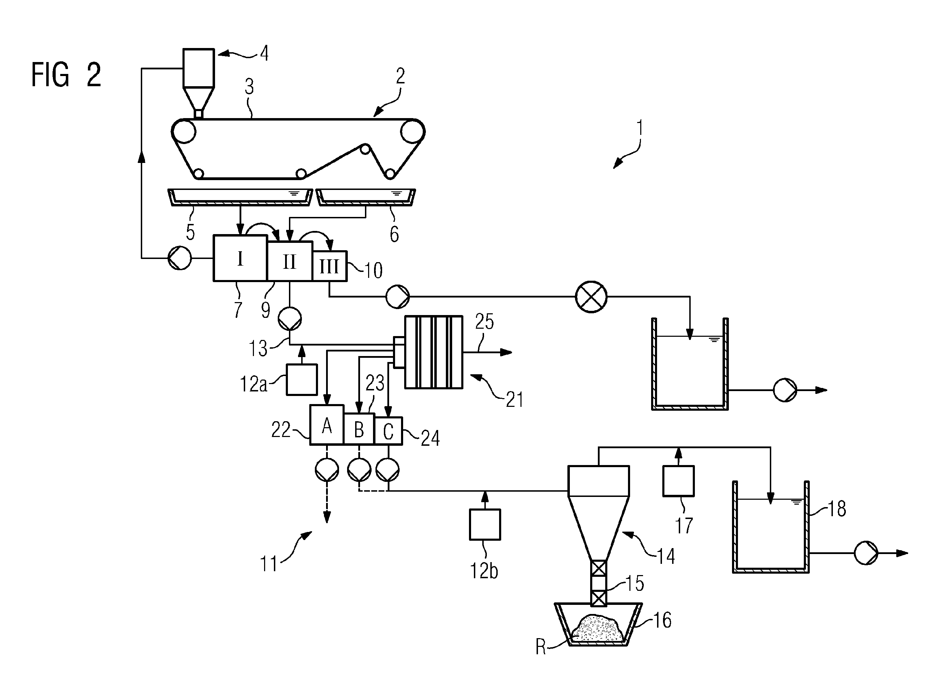

FIG 2 zeigt eine weitere erfindungsgemäße Ausführungsform einer Einrichtung 1 zur Papierherstellung, die ebenfalls eine Papiermaschine 2, auch hier nur ausschnittsweise dargestellt, mit einem Transportsieb 3 und einer Stoffaufgabe 4 umfasst. In gleicher Weise sind auch hier die beiden Auffangwannen 5, 6 sowie die drei Auffangbehälter 7, 9 und 10 zum Auffangen des "Siebwassers 1", "Siebwassers 2" und "Siebwassers 3" vorgesehen. Auch hier ist, in detaillierter Darstellung, dem Auffangbehälter 9, also dem "Siebwasser 2" eine Vorrichtung 11 zum Ausfällen und Abscheiden des CaCO₃ nachgeschaltet. Zur Entstoffung (mechanische Reinigung) wird das anfallende "Siebwasser 2" über eine Trenneinrichtung gegeben, hier ein Scheibenfilter, wo das "Siebwasser 2" in zwei oder drei Fraktionen gereinigt wird. Wie in FIG 2 beispielhaft dargestellt, fällt die Fraktion A, die Fraktion B und die Fraktion C, die jeweils in separaten Auffangbehältern 22, 23 und 24 aufgefangen werden, an. Am Ausgang der Filtereinrichtung 21, wie durch Pfeil 25 dargestellt ist, fällt ein Filterkonzentrat (Faserstoff) an, der bevorzugt in den Produktionsprozess im Bereich der Stoffaufbereitung zurückgeführt wird.

Im gezeigten Ausführungsbeispiel sind die Wasserqualitäten, ausgedrückt durch einen niedrigen Feststoffgehalt, von Fraktion A über Fraktion B nach Fraktion C fallend. Fraktion A im Auffangbehälter 22 stellt somit die sauberste aller drei Fraktionen dar. Je nach Verwendung wird die jeweilige der drei Fraktionen weiter behandelt. Die anfallenden Fraktionen A, B und C enthalten gelöste Substanzen, wie z. B. Kalzium (Ca), die durch Zugabe von Hilfsmittel (z. B. NaOH) als Reaktionsprodukt CaCO₃ ausfallen.

Deshalb ist dem Auffangbehälter 24 eine Zugabeeinrichtung 12b nachgeschaltet, in der in vorbestimmter Dosierung NaOH zugegeben wird, so dass eine weitere Ausfällreaktion in Gang gesetzt wird und hierüber sichergestellt wird, dass auch die restlichen noch gelösten Reaktionspartner, also das Kalzium und das Kohlendioxid, miteinander reagieren können. Das in dieser Weise behandelte Wasser wird nun der auch hier vorgesehenen Zentrifugaltrenneinrichtung 14 gegeben, über deren Abzug 15 das hierin getrennte Reaktionsprodukt R abgezogen und in Auffangwanne 16 aufgefangen wird. Das hiervon gereinigte Wasser wird auch hier einer Neutralisiereinrichtung 17 zugeführt, wo der pH-Wert gemessen und wieder auf einen vorbestimmten Wert durch Zugabe eines entsprechenden Additivs, üblicherweise einer leichten Säure (z. B. Essigsäure), eingestellt wird, wonach das nunmehr komplett aufbereitete Wasser dem Auffangbehälter 18 zugeführt wird, von dem aus im Falle einer Wiederverwendung abgezogen wird. Die Art der Wiederverwendung ist hier nicht näher dargestellt.

Eine beispielsweise identisch aufgebaute Vorrichtung 11 kann auch dem Auffangbehälter 10, also dem "Siebwasser 3", nachgeschaltet sein, wobei diese hier jedoch nicht im Detail dargestellt ist, sondern lediglich durch das "X im Kreis"-Symbol angegeben ist. Selbstverständlich bestünde die Möglichkeit, anstelle der die Filtereinrichtung 21 aufweisenden Vorrichtung 11 aus FIG 2 eine Vorrichtung 11, wie sie in FIG 1 dargestellt ist, an dieser Stelle zu verwenden.

## Patentansprüche

1. Einrichtung zur Papierherstellung, insbesondere Altpapier, aus einem wasserhaltigen Faserbrei, wobei das Wasser dem Faserbrei bis zur Ausgabe des Endprodukts weitgehend entzogen, in einer oder mehreren Auffangeinrichtungen aufgefangen und über eine oder mehrere Leitungen einer Wiederverwendung an einer Einrichtungskomponente zugeführt oder an eine Kläreinrichtung abgeführt wird, wobei wenigstens eine einer Auffangeinrichtung oder einer Leitung zugeordnete Vorrichtung (11) zum gezielten Ausfällen eines Reaktionsprodukts von im Wasser gelöst vorliegenden Reaktionspartnern und/oder Abziehen des Reaktionsprodukts, insbesondere CaCO₃, vorgesehen ist, wobei die Vorrichtung eine Zugabeeinrichtung für wenigstens ein die Ausfällreaktion in Gang setzendes Mittel aufweist,
**dadurch gekennzeichnet, dass** die Vorrichtung ferner eine der Zugabeeinrichtung (12, 12a, 12b) nachgeschaltete Neutralisiereinrichtung (17) zum Neutralisieren einer durch das der Ausfällung dienende Mittel verursachten Veränderung des pH-Werts des Wassers aufweist, und dass die Vorrichtung (11) eine Zentrifugaltrenneinrichtung (14) aufweist, der das das Reaktionsprodukt (R), insbesondere Ca-CO₃, enthaltende Wasser zum Trennen und Abziehen des Reaktionsprodukts (R) vom Wasser zugeführt wird, wobei die Zentrifugaltrenneinrichtung (14) der Zugabeeinrichtung (12, 12a, 12b) nachgeschaltet und der Neutralisiereinrichtung (17) vorgeschaltet ist.

2. Einrichtung nach Anspruch 1,
**dadurch gekennzeichnet, dass** die Einrichtung (1) eine erste und wenigstens eine zweite Auffangeinrichtung (7, 9, 10) für von einem den aufgebrachten Faserbrei transportierenden Transportsieb (3) abtropfenden Wasser aufweist, wobei wenigstens einer Auffangeinrichtung (7, 9, 10), insbesondere der zweiten (9), oder einer von dieser abgehenden Leitung (13) eine Vorrichtung (11) zum Ausfällen und/oder Abtrennen zugeordnet ist.

3. Einrichtung nach einem der vorangehenden Ansprüche,
**dadurch gekennzeichnet, dass** die Vorrichtung (11) wenigstens eine Filtereinrichtung (21) aufweist.
